(19) Europäisches Patentamt / European Patent Office / Office européen des brevets

(11) **EP 4 269 527 A1**

(12) **EUROPEAN PATENT APPLICATION**
published in accordance with Art. 153(4) EPC

(43) Date of publication:
**01.11.2023 Bulletin 2023/44**

(21) Application number: **21915306.1**

(22) Date of filing: **28.12.2021**

(51) International Patent Classification (IPC):
**C09J 11/06** (2006.01)      **C08K 5/03** (2006.01)
**C08L 11/02** (2006.01)      **C09J 111/02** (2006.01)

(52) Cooperative Patent Classification (CPC):
**C08K 5/03; C08L 11/02; C09J 11/06; C09J 111/02**

(86) International application number:
**PCT/JP2021/048751**

(87) International publication number:
**WO 2022/145448 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2020 JP 2020219651**

(71) Applicant: **Resonac Corporation**
**Tokyo 105-8518 (JP)**

(72) Inventors:
• **OGAWA, Noriko**
  **Tokyo 105-8518 (JP)**
• **SHIBUYA, Akira**
  **Tokyo 105-8518 (JP)**

(74) Representative: **Strehl Schübel-Hopf & Partner**
**Maximilianstrasse 54**
**80538 München (DE)**

(54) **POLYCHLOROPRENE LATEX COMPOSITION**

(57)    The present invention relates to a polychloroprene latex composition, a dip-molded product, a pressure-sensitive adhesive, an adhesive, and an adhesive product. The polychloroprene latex composition contains a chloroprene (co)polymer (A) and an aromatic compound (B) having 7 to 10 carbon atoms, and the polychloroprene latex composition has a proportion of the aromatic compound (B) having 7 to 10 carbon atoms of 0.0012 to 0.15 parts by mass based on 100 parts by mass of solid content of the polychloroprene latex composition.

**Description**

Technical Field

The present invention relates to a latex composition including, as a main component, a polymer of 2-chloro-1,3-butadiene (chloroprene) or a copolymer of 2-chloro-1,3-butadiene and a comonomer, and a molded article, particularly a dip-molded product, obtained from the latex composition.

Background Art

Chloroprene rubber (hereinafter, sometimes abbreviated as "CR") has good properties such as general rubber physical properties, weather resistance, heat resistance, and chemical resistance, and thus has been widely used in, for example, applications of dip-molded products such as gloves, pressure-sensitive adhesive application, adhesive application, and civil engineering and construction applications such as elastic asphalt (modified asphalt) and elastic cement. Particularly, in applications of medical disposable gloves, especially, surgical gloves, chloroprene rubber has been used to prevent shock symptoms (anaphylaxis) due to natural rubber allergy because the chloroprene rubber has flexibility and mechanical properties relatively similar to those of natural rubber, which can be produced at relatively low cost. Gloves made of chloroprene rubber have excellent features such that users can feel a sense of fit (comfortableness), which are similar to those of natural rubber, and that the gloves follow fine movements of the users' fingertips well (followability). However, since a chloroprene polymer crystallizes at a low temperature and resultantly has increased hardness, gloves made of chloroprene rubber have a problem of a poor feeling of use at a low temperature.
The crystallization of the chloroprene polymer may be hindered when impurities are present in chloroprene latex. As an example of the chloroprene latex containing impurities, chloroprene latex containing a chloroprene dimer (for example, Patent Literatures 1 and 2) is known.

Citation List

Patent Literature

Patent literature 1: JP5525684
Patent Literature 2: JP1991-203609A

Summary of Invention

Technical Problem

However, techniques described in Patent Literature 1 provide a method for suppressing the amount of a chloroprene dimer produced during the production of chloroprene latex to cope with an odor of the chloroprene latex, and a molded article containing impurities has not been evaluated for, for example, flexibility. Patent Literature 2 proposes a method for removing impurities such as dimers from extruded polychloroprene; however, Patent Literature 2 is also a literature on odor control and has no description on the function of a molded article obtained from the chloroprene rubber. Furthermore, there is no known technique to suppress the crystallization of the chloroprene polymer. Therefore, it is currently difficult to prevent the crystallization of the chloroprene polymer at a low temperature, and chloroprene rubber that can maintain flexibility at a low temperature has not been obtained yet. As described above, since conventional chloroprene rubber becomes hard due to the progress of crystallization of chloroprene polymer at a low temperature, there is a problem that gloves and rubber thread produced from the conventional chloroprene rubber provide a poor feeling of use at a low temperature.
An object of the present invention is to provide a molded article that can maintain flexibility at a low temperature (for example, -10°C) and can be suitably used as, for example, gloves or rubber thread even at a low temperature, and a latex composition that can be used for the production of such a molded article.

Solution to Problem

As a result of intensive studies to solve this problem, the present inventors have found that chloroprene rubber produced from a polychloroprene latex composition containing a specific substance does not cure even at a low temperature, resulting in a molded article that does not impair a feeling of use.

That is, the present invention relates to the following polychloroprene latex composition.

[1] A polychloroprene latex composition including: a chloroprene (co)polymer (A); and an aromatic compound (B) having 7 to 10 carbon atoms, wherein

the polychloroprene latex composition has a proportion of the aromatic compound (B) having 7 to 10 carbon atoms of 0.0012 to 0.15 parts by mass based on 100 parts by mass of solid content of the polychloroprene latex composition.

[2] The polychloroprene latex composition according to [1], wherein the aromatic compound (B) having 7 to 10 carbon atoms is a compound in which one or more hydrogen atoms bonded to an aromatic ring are replaced with a chlorine atom or a substituent containing a chlorine atom.

[3] The polychloroprene latex composition according to [1] or [2], wherein the aromatic compound (B) having 7 to 10 carbon atoms is a disubstituted aromatic compound.

[4] The polychloroprene latex composition according to any one of [1] to [3], wherein the aromatic compound (B) having 7 to 10 carbon atoms has a molecular weight of 100 to 200.

[5] The polychloroprene latex composition according to any one of [1] to [4], including 4-chlorovinylbenzene as the aromatic compound (B) having 7 to 10 carbon atoms.

[6] The polychloroprene latex composition according to any one of [1] to [5], including at least one selected from 2-methylbenzyl chloride and 3-methylbenzyl chloride as the aromatic compound (B) having 7 to 10 carbon atoms.

[7] The polychloroprene latex composition according to any one of [1] to [6], wherein the polychloroprene latex composition has a proportion of the chloroprene (co)polymer (A) of 40 to 99.9 parts by mass based on 100 parts by mass of solid content of the polychloroprene latex composition.

[8] The polychloroprene latex composition according to any one of [1] to [7], further including a vulcanization accelerator, a metal oxide, and an antioxidant.

[9] The polychloroprene latex composition according to any one of [1] to [8], further including a tackifier.

[10] A dip-molded product obtained by molding the polychloroprene latex composition according to any one of [1] to [8] by a dipping method followed by curing.

[11] A pressure-sensitive adhesive including the polychloroprene latex composition according to any one of [1] to [9].

[12] An adhesive including the polychloroprene latex composition according to any one of [1] to [9].

[13] An adhesive product including: a first adherend; a layer of solid content of the polychloroprene latex composition according to any one of [1] to [9] adhered to a part of the first adherend; and a second adherend laminated onto the layer of solid content.

Advantageous Effect of Invention

It is possible to provide a molded article that can maintain flexibility at a low temperature and can be suitably used as, for example, gloves or rubber thread, and a latex composition that can be used for the production of such a molded article.

Description of Embodiment

Hereinafter, the present invention will be described in detail, but the present invention is not limited to the configurations of the following embodiments. In the description of the claims and the present specification, "to" defining a numerical range means numerical values between the lower limit and the upper limit of the range, both inclusive.

<<Polychloroprene latex composition>>

The polychloroprene latex composition of the present invention contains at least a chloroprene (co)polymer (A) and an aromatic compound (B) having 7 to 10 carbon atoms. Here, the proportion of the aromatic compound (B) having 7 to 10 carbon atoms is 0.0012 to 0.15 parts by mass based on 100 parts by mass of solid content of the polychloroprene latex composition. In the following description, the aromatic compound (B) having 7 to 10 carbon atoms may be simply referred to as "aromatic compound (B)". The polychloroprene latex composition may be produced by adding the aromatic compound (B) to the polychloroprene latex. The polychloroprene latex composition may also be produced by emulsion polymerization of monomers constituting the chloroprene (co)polymer (A) under conditions in which the aromatic compound (B) is formed as a by-product.

As used herein, the polychloroprene latex alone or polychloroprene latex to which the aromatic compound (B) is added is referred to as a "polychloroprene latex composition a". On the other hand, a composition to which at least one selected from, for example, a tackifier, a surfactant (other than those used during polymerization of the chloroprene (co)polymer (A)), a vulcanization accelerator, a metal oxide such as a zinc oxide dispersion, an acid acceptor, an antioxidant, a filler, a pigment, a colorant, a wetting agent, a defoaming agent, and a thickener is added is referred

as a "polychloroprene latex composition b".

[Polychloroprene latex]

Polychloroprene latex refers to the latex in which the chloroprene (co)polymer (A) is dispersed in a dispersion medium such as water. The chloroprene (co)polymer (A) is a polymer containing 2-chloro-1,3-butadiene (hereinafter, also referred to as "chloroprene") as a main monomer component, and specifically, may be any one of:

> (1) a homopolymer of 2-chloro-1,3-butadiene (A-1);
> (2) a copolymer of 2-chloro-1,3-butadiene (A-1) and 2,3-dichloro-1,3-butadiene (A-2);
> (3) a copolymer of 2-chloro-1,3-butadiene (A-1), 2,3-dichloro-1,3-butadiene (A-2), and a monomer (A-3) to be described later; and
> (4) a copolymer of 2-chloro-1,3-butadiene (A-1) and the monomer (A-3) to be described later.

The chloroprene (co)polymer (A) may also be a mixture of two or more of (1) to (4) above. In the present invention, "polychloroprene latex" means a latex in which one or more of the (co)polymers (1) to (4) above are dispersed in a dispersion medium.
In the chloroprene (co)polymer (A), a ratio of the mass of the structure (monomer unit) derived from 2-chloro-1, 3-butadiene (A-1) to the mass of the monomer unit derived from 2,3-dichloro-1, 3-butadiene (A-2) (mass of monomer unit derived from (A-1): mass of monomer unit derived from (A- 2)) is preferably 100:0 to 70:30, more preferably 100:0 to 75:25, and even more preferably 100:0 to 80:20.
When the amount of the monomer unit derived from 2-chloro-1, 3-butadiene (A-1) and the monomer unit derived from 2,3-dichloro-1, 3-butadiene (A-2) is 100 parts by mass in total, the amount of the monomer unit derived from 2-chloro-1, 3-butadiene (A-1) is preferably 70 parts by mass or more because the tensile strength of the molded article is improved.
The chloroprene (co)polymer (A) preferably includes the monomer unit derived from 2-chloro-1, 3-butadiene (A-1) and the monomer unit derived from 2,3-dichloro-1, 3-butadiene (A-2). The chloroprene (co)polymer (A) including the monomer unit derived from 2,3-dichloro-1, 3-butadiene (A-2) is preferred because of its excellent flexibility at room temperature (25°C) .
When the chloroprene (co)polymer (A) includes the monomer unit derived from 2,3-dichloro-1,3-butadiene (A-2), the amount of the monomer unit derived from 2,3-dichloro-1,3-butadiene (A-2) is preferably 0.01 parts by mass or more, and more preferably 5 parts by mass or more, based on 100 parts by mass of the monomer unit derived from 2-chloro-1,3-butadiene (A-1) and the monomer unit derived from 2,3-dichloro-1, 3-butadiene (A-2) in total. When the amount of the monomer unit derived from 2,3-dichloro-1,3-butadiene (A-2) is 30 parts by mass or less, the molded article is excellent in flexibility, hence preferable. Note that a criterion for the flexibility of the molded article is obtained from a durometer hardness A in Examples to be described later. When the durometer hardness A is preferably 20 to 65 and more preferably 20 to 60, the molded article has excellent flexibility.
The chloroprene (co)polymer (A) can include monomer units derived from the monomer (A-3) in addition to monomer units derived from 2-chloro-1,3-butadiene (A-1) and optionally monomer units derived from 2,3-dichloro-1,3-butadiene (A-2). Here, the monomer (A-3) is a monomer other than 2-chloro-1,3-butadiene (A-1) or 2,3-dichloro-1,3-butadiene (A-2) and copolymerizable with at least one selected from 2-chloro-1,3-butadiene (A-1) and 2,3-dichloro-1,3-butadiene (A-2). The monomer (A-3) may be a monomer copolymerizable with both 2-chloro-1,3-butadiene (A-1) and 2,3-dichloro-1,3-butadiene (A-2). Note that the monomer (A-3) does not include a compound corresponding to an aromatic compound (B) to be described later. Examples of the monomer (A-3) include 1-chloro-1,3-butadiene, butadiene, isoprene, styrene, acrylonitrile, acrylic acid and esters thereof, and methacrylic acid and esters thereof. The chloroprene (co)polymer (A) may include, as required, structures derived from two or more monomers, as the structure derived from the monomer (A-3).
In the chloroprene (co)polymer (A), a ratio of the mass of the monomer unit derived from 2-chloro-1, 3-butadiene (A-1) to the mass of the monomer unit derived from the monomer (A-3) (mass of monomer unit derived from (A-1): mass of monomer unit derived from (A- 3)) is preferably 100:0 to 90:10, more preferably 100:0 to 92:8, and even more preferably 100:0 to 94:6.
When the chloroprene (co)polymer (A) includes the monomer unit derived from the monomer (A-3), the amount of monomer unit derived from the monomer (A-3) is 0.01 parts by mass or more based on 100 parts by mass of the monomer unit derived from 2-chloro-1,3-butadiene (A-1) and the monomer unit derived from the monomer (A-3) in total. When the proportion of the monomer unit derived from the monomer (A-3) is 10 parts by mass or less, the tensile strength and elongation of the molded article are favorable, and the stability over time of the flexibility of the molded article is favorable.

<Method for producing polychloroprene latex>

The method for producing a polychloroprene latex is preferably a method of radically polymerizing a monomer in an aqueous emulsion. In this method, a polychloroprene latex is obtained in which particles of the chloroprene (co)polymer (A) are dispersed in a dispersion medium such as water.

The emulsifier in the emulsion polymerization method is preferably an anionic surfactant. Examples of the anionic surfactant include rosin acid soap, sodium salts of naphthalenesulfonic acid condensates, sodium salts of dodecylbenzenesulfonic acid, and sodium salts of dodecylsulfuric acid. For applications of dip-molded products, usual rosin acid soap can be used, especially in view of simple operation for coagulation. Particularly in view of coloring stability, a sodium salt or potassium salt of disproportionate rosin acid is preferably used.

The amount of the emulsifier used is preferably 1 to 30 parts by mass based on 100 parts by mass of the total of all the monomers: 2-chloro-1,3-butadiene (A-1), 2,3-dichloro-1,3-butadiene (A-2), and the monomer (A-3). When the amount of the emulsifier used is 1 part by mass or more, poor emulsification is less likely to occur, heat generation due to polymerization can be controlled, and the formation of aggregates is suppressed. Thus, a molded article provided from the polychloroprene latex tends to have a good appearance. When the amount of the emulsifier used is 30 parts by mass or less, it is preferable because the adhesion of the chloroprene (co)polymer (A) caused by the emulsifier remaining in the polychloroprene latex is unlikely to occur, and removing failure from the mold (former) used to provide a molded article and adhesion of the surface of the molded article are unlikely to occur, whereby deterioration in processability, handleability, and color tone of the product, is unlikely to occur. Note that two or more surfactants, which are emulsifiers, may be used as appropriate.

The chain transfer agent is not particularly limited, and xanthogendisulfide and alkyl mercaptan can be used. Examples of the alkyl mercaptan include n-dodecyl mercaptan, n-decylmercaptan, octylmercaptan, and tert-dodecyl mercaptan. Examples of the xanthogendisulfide include diisopropyl xanthogendisulfide and diethyl xanthogendisulfide.

The amount of the chain transfer agent used varies depending on the type of the chain transfer agent, the amount of 2,3-dichloro-1,3-butadiene (A-2) used, the polymerization conversion rate, and the polymerization temperature. For example it is not necessarily appropriate to suggest that, in the case of using n-dodecyl mercaptan, the amount of the chain transfer agent used is preferably 0.03 to 0.2 parts by mass, and more preferably 0.06 to 0.15 parts by mass based on 100 parts by mass of the total of all the monomers: 2-chloro-1,3-butadiene (A-1), 2,3-dichloro-1,3-butadiene (A-2), and the monomer (A-3).

In the production of polychloroprene latex, the polymerization conversion rate is preferably 80 to 100%. A polymerization conversion rate of 80% or more is preferred because the solid content of the polychloroprene latex is sufficient, which facilitates molding treatment such as film forming and prevents pinholes and cracks in the molded article. The solid content of the polychloroprene latex here refers to a component obtained by removing the dispersion medium such as water, from the polychloroprene latex. The component is provided when the polychloroprene latex is allowed to stand in an oven at 141°C for 30 minutes to dryness.

When the aromatic compound (B) is formed simultaneously with the emulsion polymerization as a by-product of the chloroprene (co)polymer (A) as described later, a polymerization conversion rate of 90% or more is more preferred because the aromatic compound (B) is easily produced.

The polymerization initiator is not particularly limited, and a general radical polymerization initiator can be used. In the case of emulsion polymerization, organic or inorganic peroxides such as benzoyl peroxide, potassium persulfate, and ammonium persulfate, and azo compounds such as azobisisobutyronitriles are preferred. One of the polymerization initiators may be used singly, or two or more thereof may be used in combination.

In polymerization of the chloroprene (co)polymer (A), a co-catalyst may be used with the polymerization initiator, if desired. The co-catalyst that can be used with the polymerization initiator is not particularly limited, and a common co-catalyst can be used. For example, co-catalysts such as anthraquinone sulfonate, potassium sulfite, and sodium sulfite can be used in combination as appropriate. One of the co-catalysts may be used singly, or two or more thereof may be used in combination.

The polymerization temperature of the chloroprene (co)polymer (A) is preferably 30 to 55°C, and more preferably in a temperature range of 35 to 50°C. If the polymerization temperature is 30°C or more, the aromatic compound (B) tends to be formed as a by-product of the chloroprene (co)polymer (A). Note that reactions involved in the formation of the aromatic compound (B) will be described later. If the polymerization temperature is 55°C or less, the polymerization operation becomes easy due to the proper vapor pressure of 2-chloro-1,3-butadiene (A-1), and the mechanical properties such as tensile strength of the molded article obtained by molding the chloroprene (co)polymer (A) tend to be improved. The polymerization time during emulsion polymerization is preferably 5 to 25 hours. The polymerization temperature and polymerization time on the emulsion polymerization are preferably within the above ranges because a desired polymerization conversion rate is achieved.

In the production of polychloroprene latex, for the purpose of providing a chloroprene (co)polymer (A) having a desired molecular weight and molecular weight distribution, it is usually preferable to add a polymerization terminator to terminate the reaction once the polymerization conversion rate reaches a predetermined value. A polymerization terminator may be used also in the embodiment of the present invention. The usable polymerization terminator is not particularly limited, and a terminator usually used can be used, including phenothiazine, para-t-butylcatechol, hydroquinone, hydroquinone monomethyl ether, and diethylhydroxylamine. One of the polymerization terminators may be used singly, or two or more thereof may be used in combination.

[Aromatic compound (B) having 7 to 10 carbon atoms]

The polychloroprene latex composition of the present invention contains at least one aromatic compound (B) having 7 to 10 carbon atoms. Examples of the aromatic compound (B) include toluene, o-xylene, m-xylene, p-xylene, vinylbenzene, 2-ethyltoluene, 3-ethyltoluene, 4-ethyltoluene, cumene, 2-propyltoluene, 3-propyltoluene, 4-propyltoluene, 1, 2-diethylbenzene, 1, 3-diethylbenzene, and 1, 4-diethylbenzene. One or more hydrogen atoms of these compounds are optionally replaced with halogen (chlorine atom, bromine atom, iodine atom, or fluorine atom), a hydroxy group, an amino group, a nitro group, a carbonyl group, a carboxyl- group, and an isocyanate group, for example. The aromatic compound (B) also includes compounds such as salicylic acid and acetophenone, which have 6 carbon atoms in the aromatic compound before being substituted with a substituent containing a carbon atom.

The aromatic compound (B) having 7 to 10 carbon atoms is preferably a compound in which one or more hydrogen atoms bonded to an aromatic ring are replaced with a chlorine atom or a substituent containing a chlorine atom, more preferably a disubstituted compound in which one or more hydrogen atoms are replaced with a chlorine atom or a substituent containing a chlorine atom, even more preferably a xylene derivative substituted with a chlorine atom or a substituent containing a chlorine atom, particularly preferably any one of 4-chlorovinylbenzene, 2-methylbenzyl chloride, 3-methylbenzyl chloride, and 4-methylbenzyl chloride, and especially preferably 4-chlorovinylbenzene.

From the viewpoint of good compatibility with the chloroprene (co)polymer (A), the molecular weight of the aromatic compound (B) is preferably 100 to 200, more preferably 120 to 180, and even more preferably 130 to 150.

The amount of the aromatic compound (B) in the polychloroprene latex composition a is 0.0012 to 0.15 parts by mass, preferably 0.002 to 0.12 parts by mass, and more preferably 0.05 to 0.1 parts by mass based on 100 parts by mass of the solid content of the polychloroprene latex composition a. When the amount of the aromatic compound (B) is 0.0012 parts by mass or more, the aromatic compound (B) can prevent crystallization of the chloroprene (co)polymer (A) in a molded article produced from the polychloroprene latex composition, whereby an increase in hardness of the molded article is suppressed even at a low temperature.

Here, the solid content of the polychloroprene latex composition a is a value obtained by multiplying the mass of the polychloroprene latex itself or, when the aromatic compound (B) is added, the mass of the polychloroprene latex (polychloroprene latex composition a) to which the aromatic compound (B) has been added, by a solid matter ratio determined by a method described in Examples below. Therefore, the contents of, for example, a tackifier, a surfactant (other than those used during polymerization of the chloroprene (co)polymer (A)), a vulcanization accelerator, a metal oxide such as a zinc oxide dispersion, an acid acceptor, an antioxidant, a filler, a pigment, a colorant, a wetting agent, a defoaming agent, and a thickener are not used when the solid content of the polychloroprene latex composition a is calculated.

In the case of adding an aromatic compound (B), the aromatic compound (B) may be added to the starting material for producing polychloroprene latex before the polymerization of the chloroprene (co)polymer (A). The aromatic compound (B) may also be added to the polychloroprene latex after the polymerization of the chloroprene (co)polymer (A). Only the aromatic compound (B) having a group copolymerizable with 2-chloro-1, 3-butadiene (A-1), 2, 3-dichloro-1, 3-butadiene (A-2), or monomer (A-3) is added to the polychloroprene latex after polymerization of the chloroprene (co)polymer (A) to prevent the aromatic compound (B) from being polymerized in the chloroprene (co)polymer (A).

In addition, the aromatic compound (B) can be produced as a by-product as a side reaction when the polymerization of the chloroprene (co)polymer (A) is conducted under predetermined conditions, using, for example, the monomer used for the polymerization of the chloroprene (co)polymer (A) as a raw material.

[Pressure-sensitive adhesive, adhesive, and adhesive product]

The polychloroprene latex composition of the present embodiment thus obtained can be used not only for the production of dip-molded products such as gloves, rubber thread, breathing bags, and sphygmomanometer bladders as described later but also as a pressure-sensitive adhesive/adhesive. The term "pressure-sensitive adhesive/adhesive" refers to a pressure-sensitive adhesive and an adhesive.

Further, an adherend with an adhesive layer can be obtained by applying the polychloroprene latex composition to a part or the whole of the surface of the adherend and drying the polychloroprene latex composition on the surface of the adherend to form a layer of the solid matter of the polychloroprene latex composition. Examples of the adherend include arbitrary materials to which the polychloroprene latex composition can be applied, such as a urethane foam, a foam, a sheet, a film, canvas, and glass.

Adhesive products can also be produced by laminating a plurality of adherends via the polychloroprene latex composition. Here, each of the plurality of adherends may be the same type of adherends, or one of the adherends (hereinafter also referred to as "first adherend") may be a different type of adherends from the other one (hereinafter also referred to as "second adherend"). When an adhesive product is produced, one of the adherends to be laminated is formed into an adherend with an adhesive layer by producing the adhesive layer on the surface of the adherend, and then the other adherend to be laminated can be laminated. Alternatively, an adhesive product may be produced by providing an adhesive layer on each of the plurality of adherends to be bonded and then laminating the adhesive layers of the adherends for bonding. Examples of the adhesive product include furniture and shoes.

[Other components included in composition]

When the polychloroprene latex composition of the present embodiment is used as a pressure-sensitive adhesive or an adhesive, a tackifier can be added to the polychloroprene latex composition. Although the polychloroprene latex composition a to which the tackifier is not added can be used as a pressure-sensitive adhesive or an adhesive, the addition of the tackifier can improve the pressure-sensitive adhesive force of the polychloroprene latex composition to provide a pressure-sensitive adhesive/adhesive having a high pressure-sensitive adhesive force.

The type of the tackifier is not particularly limited, but phenolic resins, terpene resins, rosin derivative resins, and petroleum hydrocarbons can be used as the tackifier. Specific examples thereof include hydrogenated rosin, pentaerythritol ester of hydrogenated rosin, polymerized rosin, rosin-modified resins with rosin as the main component, alkylphenol resins, rosin-modified phenol resins, terpene-modified phenol resins, and natural terpene resins. One of the tackifiers may be used singly, or two or more thereof may be used in combination.

The amount of the tackifier added is usually 10 to 60 parts by mass, and preferably 20 to 40 parts by mass based on 100 parts by mass of the solid content of the polychloroprene latex determined with the solid content (ratio) obtained by a method described in Examples to be described later and the mass of the polychloroprene latex. When the amount of the tackifier added is within the above range, the adhesiveness of the polychloroprene latex composition is sufficiently ensured, and the adhesive strength of the polychloroprene latex composition is sufficiently improved. The method of adding the tackifier is not particularly limited, but the tackifier may be added to the polychloroprene latex composition in the form of an emulsified dispersion emulsion.

In addition, if necessary, a surfactant, a vulcanization accelerator, a metal oxide such as a zinc oxide dispersion, an acid acceptor, an antioxidant, a filler, a pigment, a coloring agent, a wetting agent, a defoaming agent, a thickener, for example, may be appropriately added to the polychloroprene latex composition a of the present embodiment to obtain a pressure-sensitive adhesive/adhesive.

Regardless of whether the above-mentioned additively substances such as a tackifier and a surfactant are added to the polychloroprene latex composition a, the proportion of the chloroprene (co)polymer (A) in the polychloroprene latex composition a is preferably 30 to 99.9 parts by mass, more preferably 40 to 98 parts by mass, and particularly preferably 50 to 95 parts by mass, based on 100 parts by mass of the solid content of the polychloroprene latex composition a. Here, the solid content of the polychloroprene latex composition a refers to a component provided when the polychloroprene latex composition a is allowed to stand in an oven at 141°C for 30 minutes to dryness. The component is obtained by removing the dispersion medium such as water, from the polychloroprene latex composition.

[Molded article]

A dip-molded product can be obtained from the polychloroprene latex composition b according to the embodiment by a dip processing method. That is, a molded article can be obtained by immersing a mold for molding in the polychloroprene latex composition b according to the present invention, molding by precipitating the solid content of the polychloroprene latex composition b on the surface of the mold for molding, and curing after drying the molded solid content. Note that a coagulant is preferably adhered to the surface of the mold to be immersed in the polychloroprene latex composition b. The molded solid content can be dried, for example, by allowing it to stand in an oven at 25 to 80°C for 5 minutes to 24 hours.

The polychloroprene latex composition b according to the present embodiment may be matured under predetermined conditions before the dip processing. The temperature conditions for the maturing is preferably 15 to 40°C, and the maturing time is preferably 15 to 72 hours. For example, conditions of maturing at 23°C for 20 hours may be employed. In the case of adding the aromatic compound (B) after the production of the polychloroprene latex, the starting point of maturing is when all the substances to be blended such as the polychloroprene latex, the aromatic compound (B) and an optional vulcanization accelerator have been mixed. On the other hand, when the aromatic compound (B) is added before the production of the polychloroprene latex and when the aromatic compound (B) is formed as a by-product of the chloroprene (co)polymer (A), the starting point of maturing is the later one of when the polymerization of the polychloroprene latex is terminated and when all the substances to be blended into the polychloroprene latex composition, including optional vulcanization accelerator, are mixed.

After the maturing, the steps of a dip and coagulation treatment, drying, and vulcanization treatment (curing) are conducted in this order to thereby provide a molded article in a film form.

The dip and coagulation treatment can be conducted by immersing a plate or a mold coated with a coagulant in the polychloroprene latex composition b for a predetermined time to thereby deposit the solid content in the polychloroprene latex composition b, including the chloroprene (co)polymer (A), on the surface of the plate or the mold. It is presumed that this is because fine particles covered with a film of an emulsifier having surface activity are formed in the polychloroprene latex, and the film of the fine particles is collapsed by the effect of the coagulant adhering to the surface of the plate or the mold, whereby the chloroprene (co)polymer (A) in the fine particles adheres to the surface of the plate or the mold. As the coagulant, a metal salt can be used. For example, a metal nitrate can be used.

In order to avoid the problem of the appearance of the molded article, such as generation of a blister or pinhole, a drying step at a relatively low temperature of 65°C or more and 100°C or less (roughly drying step) may be conducted before the vulcanization treatment. The drying step is conducted before vulcanization treatment, regardless of whether a roughly drying step has been conducted.

The vulcanization temperature in the vulcanization treatment can be 110 to 140°C, for example. The solid content in the polychloroprene latex composition b deposited by the dip and coagulation treatment can be vulcanized at 130°C in air, for example. The vulcanization time in the above vulcanization temperature range can be 15 to 90 minutes, for example. Sufficient vulcanization treatment is preferably conducted to the extent that the tensile strength and tensile elongation ratio of the molded article do not deteriorate.

For example, vulcanizing the solid content deposited on the surface of the plate or the mold under the above conditions can provide a molded article.

The aromatic compound (B) can prevent crystallization of the chloroprene (co)polymer (A) in a molded article provided from the polychloroprene latex composition b according to the present invention, whereby an increase in hardness of the molded article containing the chloroprene (co)polymer (A) is suppressed even at a low temperature. The present inventors presume that this is because the aromatic compound (B) disturbs the crystal regularity of the chloroprene (co)polymer (A). Therefore, a molded article provided from the polychloroprene latex composition according to the present invention can maintain flexibility even at a low temperature. As a result, when the molded article is gloves, the user's wearing comfort does not deteriorate even at low temperatures. In addition, when the molded article is, for example, a sphygmomanometer bladder, a breathing bag, or rubber thread, the feeling of use for the user is improved even at a low temperature.

[Application of molded article]

The molded article can be suitably used particularly as gloves such as medical disposable gloves, a sphygmomanometer bladder, a breathing bag, and rubber thread, for example. The modulus at 500% elongation (M500), tensile strength, elongation at break, and durometer hardness A at a low temperature of the molded article can be measured by a method employed in Examples to be described later.

The modulus at 500% elongation of the molded article is preferably 1.0 to 5.0 MPa, and more preferably 2.0 to 4.0 MPa, from the viewpoint of the feeling of use when used in gloves, for example.

The tensile strength of the molded article is preferably 15 to 40 MPa, and more preferably from 17 to 30 MPa, in view of the molded article being more resistant to breaks.

The elongation at break of the molded article is preferably 500 to 1500%, and more preferably 700 to 1200%, in view of the molded article being more resistant to breaks.

The change in durometer hardness A of the molded article over time at low temperature (-10°C) is preferably 10 to 30, and more preferably from 15 to 25, from the viewpoint of brittleness at a low temperature.

Examples

Hereinafter, the present invention will be described with reference to Examples and Comparative Examples, but the present invention is not limited to the examples below. Measurement methods and calculation methods of physical properties of polychloroprene latex and polychloroprene latex composition are first described, followed by individual Example.

<Calculation method of polymerization conversion rate>

An emulsion after the start of the polymerization of the chloroprene (co)polymer (A) was collected and allowed to stand in an oven at 141°C for 30 minutes to dryness to thereby obtain a dried-out material. The dried-out material obtained by the drying treatment includes the chloroprene (co)polymer (A) and solid matters other than the chloroprene (co)polymer (A). Then, the mass of the component that did not evaporate at 141°C among the various components used for the emulsion polymerization was calculated from the amount of the polymerization material fed, and was used as the mass of the solid matter other than the chloroprene (co)polymer (A). A value obtained by subtracting the mass of the solid matter other than the chloroprene (co)polymer (A) from the mass of the dried-out material obtained by drying the emulsion after the start of the polymerization was used as the "amount of the chloroprene (co)polymer (A) formed," and the polymerization conversion rate was calculated by an expression (1).

```
Polymerization conversion rate (%) = [(amount of

chloroprene (co)polymer (A) formed)/(mass of all monomers

fed)] × 100 ··· (1)
```

The "mass of all monomers fed" in the expression (1) is the sum of the amount of 2-chloro-1,3-butadiene (A-1) fed and optionally the amount of 2,3-dichloro-1,3-butadiene (A-2) and the amount of monomer (A-3) fed, those were included in the emulsion collected to provide the dried-out material.

<Solid content of polychloroprene latex (polychloroprene latex composition a) (by measurement)>

A predetermined amount of the polychloroprene latex (or the polychloroprene latex composition a; the same applies hereinafter) was collected, and the mass of the collected polychloroprene latex was weighed. Subsequently, the weighed polychloroprene latex was allowed to stand in an oven at 141°C for 30 minutes to dryness to thereby obtain a dried-out material. A solid content was determined from the mass of the latex before being dried and the mass of the solid content obtained after being dried in accordance with an expression (2).

```
Solid content (mass%)

= [(mass of solid content after being dried)/(mass of latex

before being dried)] × 100 ··· (2)
```

<Content of aromatic compound (B) in polychloroprene latex composition>

2 mL (about 2.1 to 2.2 g) of the polychloroprene latex composition was collected in a 20 mL headspace vial and heated to 100°C for 60 minutes with shaking after capping. Thereafter, the resulting outgas was measured by GCMS using an autosampler. The measurement conditions are as follows.

{Measurement conditions}

GC: Agilent 6890N
MS: JEOL AutomassII
Column: Agilent Technologies DB-624 320 $\mu$m $\times$ 30 m, (film thickness) 1.8 $\mu$m
Mobile phase: He 2.2 ml/min, constant flow
Injection volume: 1.0 mL
Inlet temperature: 250°C
Injection method: split injection method (split ratio 5:1)
Analysis time: 60 minutes
Interface temperature: 250°C
Ion source temperature: 200°C
Column temperature condition: 40°C (20 minutes) $\rightarrow$ 240°C (20 minutes) (temperature rising condition at this time: +10°C/min)
Measurement mode: SCAN (m/z = 35 - 300)
Ionization method: EI

Accelerating voltage: 70 eV
Detector voltage: 500 V
ionization current: 300 μA

[Example 1]

<Preparation of polychloroprene latex (A1) and addition of aromatic compound (B)>

A glass reactor having an internal volume of 5 litters was charged with 2.0 kg (100 parts by mass) of 2-chloro-1,3-butadiene (A-1) (manufactured by Tokyo Chemical Industry Co., Ltd.), 1.6 kg (80 parts by mass) of pure water, 80 g (4 parts by mass) of rosin acid (manufactured by ARAKAWA CHEMICAL INDUSTRIES, LTD, R-300), 2 g (0.1 parts by mass) of n-dodecyl mercaptan (Tokyo Chemical Industry Co., Ltd.), 100 g (5 parts by mass) of 20% by mass potassium hydroxide aqueous solution (special grade product, manufactured by Wako Pure Chemical Corporation), and 16 g (0.8 parts by mass) of a sodium salt of a β-naphthalene sulfonate formaldehyde condensate (manufactured by Kao Corporation). The starting materials fed in the reactor were emulsified, and the rosin acid was converted into rosin acid soap.
Note that 2-chloro-1,3-butadiene (A-1) was blended as a starting monomer of the chloroprene polymer, and pure water was blended as a dispersion medium for emulsion polymerization. n-Dodecyl mercaptan was blended as a chain transfer agent, rosin acid and potassium hydroxide were blended as raw materials for an emulsifier, and the sodium salt of a β-naphthalene sulfonate formaldehyde condensate was blended as an emulsifier. Note that the amount of potassium hydroxide blended is 100 g (5 parts by mass) as a 20% by mass aqueous solution, and thus 20 g (1 part by mass) as potassium hydroxide.
Potassium persulfate (first-class product, manufactured by Wako Pure Chemical Corporation) was added as a polymerization initiator to the emulsion obtained by emulsifying the starting materials, and the polymerization was conducted under a nitrogen atmosphere at 40°C for 7 hours. The polymerization was terminated at the confirmation of a polymerization conversion rate of the monomer of 88%. Subsequently, unreacted monomers were removed by steam distillation. A polychloroprene latex composition (A1a) was obtained by adding 0.005 parts by mass of 4-chlorovinylbenzene (manufactured by Tokyo Chemical Industry Co., Ltd.) and 0.005 parts by mass of 2-methylbenzyl chloride (manufactured by Tokyo Chemical Industry Co., Ltd.) based on 100 parts by mass of 2-chloro-1,3-butadiene (A-1) fed in the reactor, to the obtained polychloroprene latex (A1). That is, 4-chlorovinylbenzene and 2-methylbenzyl chloride were added to the polychloroprene latex composition (A1a) in an amount of 0.10 g each. The measured solid content of the polychloroprene latex (A1a) was 49.2% by mass.
The polychloroprene latex composition (A1a) obtained by the above method was analyzed by GCMS. The ratio of the peak area of the reference S (retention time: 1 min 34 sec) to that of 4-chlorovinylbenzene (retention time: 31 min 48 sec) was 0.028 while the ratio of the peak area of the reference S to that of 2-methylbenzyl chloride (retention time: 33 min 46 sec) was 0.118. The peak area ratio obtained is shown in Table 1.
The proportion of the aromatic compound (B) contained based on the solid content of the polychloroprene latex composition (A1a) was calculated on the basis of the solid content of the polychloroprene latex composition (A1a) according to the above measurement method and the amounts of 4-chlorovinylbenzene and 2-methylbenzyl chloride added. The proportion of 4-chlorovinylbenzene is 0.0053 parts by mass while the proportion of 2-methylbenzyl chloride was 0.0053 parts by mass, based on 100 parts by mass of solid matter of the polychloroprene latex composition (A1a).

<Preparation of chloroprene copolymer latex composition b>

A three-one-motor stirring tank was charged with the polychloroprene latex composition (A1a), surfactant, vulcanization accelerator, zinc oxide, and phenolic antioxidant dispersion in amounts shown below and stirred for 30 minutes. Hereinafter, the obtained composition is referred to as polychloroprene latex composition (A1b).
Solid content of polychloroprene latex composition (A1a) 100 parts by mass

Surfactant 1) 1 part by mass
Vulcanization accelerator 2) 1 part by mass
Vulcanization accelerator 3) 1 part by mass
Zinc oxide dispersion 4) 5 parts by mass

Phenolic antioxidant dispersion 5) 2 parts by mass Here, substances used as the surfactant, vulcanization accelerator, zinc oxide, and phenolic antioxidant dispersion are as follows.

Surfactant 1): sodium alkyl sulfate, Darvan WAQ, manufactured by RT Vanderbilt Holding Company, Inc.
Vulcanization accelerator 2) NOCCELER (R) C, N,N'-diphenylthiourea, manufactured by OUCHI SHINKO CHEMICAL INDUSTRIAL CO., LTD.
Vulcanization accelerator 3) NOCCELER (R) D, 1,3-diphenyl guanidine, manufactured by OUCHI SHINKO CHEMICAL INDUSTRIAL CO., LTD.
Zinc oxide dispersion 4) ZnO, AZ-SW, manufactured by Osaki Industry Co., Ltd.
Phenolic antioxidant dispersion 5) oligomeric hindered phenol (butylated reactant of DCPD and p-cresol), K-840 (Wingstay L dispersion), manufactured by CHUKYO YUSHI CO., LTD.

The zinc oxide AZ-SW and phenolic antioxidant K-840 were each in the form of a dispersion, which includes the zinc oxide or the antioxidant as an active ingredient dispersed in a liquid medium. The amount of each of the above-described zinc oxide AZ-SW and phenolic antioxidant K-840 fed is only the amount of the active ingredient of each of the zinc oxide AZ-SW and the K-840 fed.

In the polychloroprene latex composition (A1b), 10 parts by mass in total of the surfactant, vulcanization accelerator, zinc oxide, and phenolic antioxidant are blended based on 100 parts by mass of the solid matter of the polychloroprene latex composition (A1a), and the total solid content is 110 parts by mass. For this reason, the proportion of the aromatic compound (B) in the polychloroprene latex composition (A1b) was calculated to be 1.1 times less than the proportion of the aromatic compound (B) in the polychloroprene latex composition (A1a). The proportion of 4-chlorovinylbenzene in the polychloroprene latex composition (A1b) is 0.0048 parts by mass based on 100 parts by mass of solid content of the polychloroprene latex composition (A1b). Similarly, the proportion of 2-methylbenzyl chloride is 0.0048 parts by mass based on 100 parts by mass of the solid content of the polychloroprene latex composition (A1b). The proportion of the aromatic compound (B) in the polychloroprene latex composition (A1b) is shown in Table 1.

<Production of film>

First, as a mold for a film of the chloroprene (co)polymer, a ceramic plate of 200 mm in length, 100 mm in width, and 5 mm in thickness was provided. This mold was dipped in a 30% by mass calcium nitrate aqueous solution, then withdrawn, and dried in an oven at 40°C for 5 minutes to thereby cause calcium nitrate, as a coagulant, to adhere to the surface of the mold.

Further, the dried mold was dipped in the polychloroprene latex composition (A1b) to cause the solid content of the polychloroprene latex composition (A1b) to deposit on the surface of the mold. The mold was withdrawn from the chloroprene copolymer latex composition and then dried in an oven at 70°C for 30 minutes.

Thereafter, leaching was conducted for 2 minutes to remove water-soluble components from the deposited solid content of the polychloroprene latex composition (A1b), and the resultant was further dried in an oven at 70°C for 30 minutes.

Next, the mold with the solid content deposited on the surface thereof was heated in an oven at 130°C for 60 minutes to cure the solid content of the polychloroprene latex composition (A1b) deposited on the surface of the mold by vulcanization treatment. After left to cool under atmospheric air, the molded article cured on the surface of the mold was cut into a desired shape and size to thereby provide a film as a vulcanized molded article.

<Tensile test of molded article obtained by vulcanization treatment>

A vulcanized film was cut into a dumbbell for test in accordance with JIS-K6301-1995 to obtain a test piece. The film test piece was subjected to a tensile test by the method in accordance with JIS-K6301-1995 to measure a modulus at 500% elongation (M500), a tensile strength, and an elongation at break, at room temperature (23°C). The results are shown in Table 1.

<Hardness measurement of molded article obtained by vulcanization treatment>

The test piece was placed in a low-temperature tank at - 10°C, and the hardness of the test piece was measured immediately after the test piece was placed and after the test piece was allowed to stand for 24 hours by a method in accordance with JISK6253-2012 with a surface hardness durometer hardness A. The results are shown in Table 1.

[Example 2]

The polymerization of the chloroprene (co)polymer (A) was started under the same conditions as in Example 1, and the polymerization reaction was terminated after 7 hours. The polymerization conversion rate of the monomer was 88%. Unreacted monomers were removed by steam distillation to obtain a polychloroprene latex (A2). A polychloroprene latex composition (A2a) was obtained by blending 0.005 parts by mass of 2-methylbenzyl chloride (manufactured by Tokyo Chemical Industry Co., Ltd.) and 0.005 parts by mass of 3-methylbenzyl chloride (manufactured by Tokyo Chemical Industry Co., Ltd.) based on 100 parts by mass of 2-chloro-1,3-butadiene (A-1) fed in the reactor to the obtained polychloroprene latex (A2). That is, 2-methylbenzyl chloride and 3-methylbenzyl chloride were added to the polychloroprene latex composition (A2a) in an amount of 0.10 g each. Therefore, the proportion of 2-methylbenzyl chloride and the proportion of 3-methylbenzyl chloride are each 0.0053 parts by mass based on 100 parts by mass of the solid content of the polychloroprene latex composition (A2a).

The polychloroprene latex composition (A2a) obtained by the above method was analyzed by GCMS under the same conditions as in Example 1. The ratio of the peak area of the reference S (retention time: 1 min 34 sec) to that of 2-methylbenzyl chloride (retention time: 33 min 46 sec) was 0.117 while the ratio of the peak area of the reference S to that of 3-methylbenzyl chloride (retention time: 34 min 5 sec) was 0.031.

A surfactant, vulcanization accelerator, zinc oxide, and phenolic antioxidant dispersion were added to the polychloroprene latex composition (A2a) obtained by the above method in the same formulation as in Example 1 to prepare the polychloroprene latex composition (A2b) in the same manner as in Example 1. Furthermore, using the polychloroprene latex composition (A2b), films and test pieces were produced as in Example 1 and various evaluations were conducted. The results are shown in Table 1. When the proportions of 2-methylbenzyl chloride and 3-methylbenzyl chloride are calculated in the same manner as in Example 1, both 2-methylbenzyl chloride and 3-methylbenzyl chloride are 0.0048 parts by mass based on 100 parts by mass of the solid content of the polychloroprene latex composition (A1b).

[Example 3]

Blending of starting materials, emulsification, and addition of a polymerization initiator were conducted under the same conditions as in Example 1. After polymerization of the chloroprene (co)polymer (A) at a temperature of 45°C for 24 hours under a nitrogen gas atmosphere, the polymerization was terminated. The polymerization conversion rate at the termination of the polymerization was 95%. Subsequently, steam distillation was conducted in the same manner as in Example 1 to obtain a polychloroprene latex (A3).

The polychloroprene latex (A3) was analyzed by GCMS under the same conditions as in Example 1. The ratio of the peak area of reference S (retention time: 1 min 34 sec) to that of 4-chlorovinylbenzene (retention time: 31 min 48 sec) was 0.031. The ratio of the peak area of the reference S to that of 2-methylbenzyl chloride (retention time: 33 min 46 sec) was 0.131, while the ratio of the peak area of the reference S to that of 3-methylbenzyl chloride (retention time: 34 min 5 sec) was 0.035.

This result also indicates that the polychloroprene latex (A3) is a polychloroprene latex composition because 4-chlorovinylbenzene (molecular weight: 140.6 g/mol), 2-methylbenzyl chloride (molecular weight: 140.6 g/mol), and 3-methylbenzyl chloride (molecular weight: 140.61 g/mol), which have been formed as by-products during the polymerization of the chloroprene (co)polymer (A), coexist in the polychloroprene latex (A3) as aromatic compounds (B). That is, the polychloroprene latex (A3) is also a polychloroprene latex composition (A3a).

Assuming that the ratio between the peak areas of the peaks derived from the aromatic compounds (B) and the peak areas of the peaks derived from the standard sample S is proportional to the content of the aromatic compounds (B), the content of the aromatic compounds (B) in the polychloroprene latex (A3) can be calculated as follows from the results of Examples 1 and 2 in which the amount of the aromatic compounds (B) added is known and the results of GCMS analysis. In the following expressions, the contents of 4-chlorovinylbenzene and 2-methylbenzyl chloride are calculated using the peak area ratio and the amount added in Example 1, and the content of 3-methylbenzyl chloride is calculated using the peak area ratio and the amount added in Example 2.

```
Content of 4-chlorovinylbenzene

    = (peak area ratio to standard sample S in Example

3)/(peak area ratio to standard sample S in Example 1) ×

(amount added in Example 1)

    = 0.031/0.028 × 0.1 = 0.111 (g)


    Content of 2-methylbenzyl chloride

    = 0.131/0.118 × 0.1 = 0.111 (g)
```

```
Content of 3-methylbenzyl chloride

    = (peak area ratio to standard sample S in Example

3)/(peak area ratio to standard sample S in Example 2) ×

(amount added in Example 2)

    = 0.035/0.031 × 0.1 = 0.113 (g)
```

Using these values to calculate the proportion of the aromatic compound (B) contained in the polychloroprene latex (A3) in the same manner as in Example 1, the proportion of each substance based on 100 parts by mass of solid content of the polychloroprene latex (A3) is as follows.

Proportion of 4-chlorovinylbenzene: 0.0055 parts by mass
Proportion of 2-methylbenzyl chloride: 0.0055 parts by mass
Proportion of 3-methylbenzyl chloride: 0.0056 parts by mass

A surfactant, vulcanization accelerator, zinc oxide, and phenolic antioxidant dispersion were added to the polychloroprene latex (A3) obtained by the above method in the same formulation as in Example 1 to prepare the polychloroprene latex composition (A3b) in the same manner as in Example 1. Furthermore, using the polychloroprene latex composition (A3b), films and test pieces were produced in the same manner as in Example 1 and various evaluations were conducted. The results are shown in Table 1. The proportion of the aromatic compound (B) in the polychloroprene latex composition (A3b) was calculated from the proportion of the aromatic compound (B) contained in the polychloroprene latex (A3) in the same manner as in Example 1. The proportion of the aromatic compound (B) based on 100 parts by mass of solid content of the polychloroprene latex composition (A3b) is as follows.

Proportion of 4-chlorovinylbenzene: 0.0050 parts by mass
Proportion of 2-methylbenzyl chloride: 0.0050 parts by mass
Proportion of 3-methylbenzyl chloride: 0.0051 parts by mass

[Comparative Example 1]

The polymerization of the chloroprene (co)polymer (A) was started under the same conditions as in Example 1, and the polymerization was terminated after 7 hours. The polymerization conversion rate of the monomer was 88%. Unreacted monomers were removed by steam distillation to obtain a polychloroprene latex (CA1).

The polychloroprene latex (CA1) was analyzed by GCMS under the same conditions as in Example 1. The ratio of the peak area of reference S (retention time: 1 min 34 sec) to that of 4-chlorovinylbenzene (retention time: 31 min 48 sec) was 0.002. The ratio of the peak area of the reference S to that of 2-methylbenzyl chloride (retention time: 33 min 46 sec) was 0.005, and the ratio of the peak area of the reference S to that of 3-methylbenzyl chloride (retention time: 34 min 5 sec) was 0.003.

Using the results of GCMS analysis of the polychloroprene latex (CA1), the content of the aromatic compound (B) in the polychloroprene latex (CA1) was calculated by a calculation similar to that in Example 3, and the following values were obtained.

Content of 4-chlorovinylbenzene: 0.0071 g
Content of 2-methylbenzyl chloride: 0.0042 g
Content of 3-methylbenzyl chloride: 0.0097 g
Calculating from these values, each content of the aromatic compound (B) based on 100 parts by mass of solid content of the polychloroprene latex (CA1) is as follows.
Proportion of 4-chlorovinylbenzene: $3.8 \times 10^{-4}$ parts by mass Proportion of 2-methylbenzyl chloride: $2.2 \times 10^{-4}$ parts by mass
Proportion of 3-methylbenzyl chloride: $5.2 \times 10^{-4}$ parts by mass

A surfactant, vulcanization accelerator, zinc oxide, and phenolic antioxidant dispersion were added to the polychloroprene latex (CA1) obtained by the above method in the same formulation as in Example 1 to prepare the polychloroprene latex composition (CA1b) in the same manner as in Example 1. Furthermore, using the polychloroprene latex composition (CA1b), films and test pieces were produced in the same manner as in Example 1 and various evaluations were conducted. The results are shown in Table 1.

The proportion of the aromatic compound (B) in the polychloroprene latex composition (CA1B) was calculated from the proportion of the aromatic compound (B) contained in the polychloroprene latex (CA1) in the same manner as in Example 1. The proportion of the aromatic compound (B) based on 100 parts by mass of solid content of the polychloroprene latex composition (CA1b) is as follows.

Proportion of 4-chlorovinylbenzene: $3.5 \times 10^{-4}$ parts by mass
Proportion of 2-methylbenzyl chloride: $2.0 \times 10^{-4}$ parts by mass
Proportion of 3-methylbenzyl chloride: $4.7 \times 10^{-4}$ parts by mass

[Table 1]

| | | Example 1 | Example 2 | Example 3 | Comparative Example 1 |
|---|---|---|---|---|---|
| | Polychloroprene latex | A1 | A2 | A3 | CA1 |
| Latex polymerization condition | Polymerization temperature (°C) | 40 | 40 | 45 | 40 |
| | Polymerization time (min) | 420 | 420 | 1440 | 420 |
| | Polymerization conversion rate (%) | 88 | 88 | 95 | 88 |
| Amount of aromatic compound (B) added | 4-Chlorovinylbenzene (g) | 0.10 | | | |
| | 2-methylbenzyl chloride (g) | 0.10 | 0.10 | | |
| | 3-methylbenzyl chloride (g) | | 0.10 | | |
| GCMS peak area ratio | 4-Chlorovinylbenzene | 0.028 | | 0.031 | 0.002 |
| | 2-methylbenzyl chloride | 0.118 | 0.117 | 0.131 | 0.005 |
| | 3-methylbenzyl chloride | | 0.031 | 0.035 | 0.003 |
| Polychloroprene latex composition (for vulcanization) | | A1b | A2b | A3b | CA1b |
| Proportion of aromatic compound (B) | 4-Chlorovinylbenzene (parts by mass) | 0.0048 | 0.0000 | 0.0050 | 0.0004 |
| | 2-methylbenzyl chloride (parts by mass) | 0.0048 | 0.0048 | 0.0050 | 0.0002 |
| | 3-methylbenzyl chloride (parts by mass) | 0.0000 | 0.0048 | 0.0051 | 0.0005 |
| Physical property of vulcanized film | M500(MPa) | 2.3 | 2.2 | 2.4 | 2.3 |
| | Tensile strength (MPa) | 18 | 17 | 21 | 21 |
| | Elongation at break (%) | 930 | 1000 | 900 | 950 |
| Durometer hardness A | Elapsed time at low temperature (-10°C) 0 hours | 37 | 44 | 38 | 37 |
| | Elapsed time at low temperature (-10°C) 24 hours | 57 | 62 | 55 | 75 |
| | Change in hardness | 20 | 18 | 17 | 38 |

As is clear from Examples 1 to 3, when the aromatic compound (B) is contained in the polychloroprene latex composition, an increase in hardness at a low temperature (-10°C) can be inhibited. Because of this, when the polychloroprene latex composition of the present invention is molded into gloves, the gloves do not become hard even if used in a cold district, whereby a comfortable feeling of use can be obtained. Further, even if the gloves are stored at a low temperature, the gloves can be worn immediately after being taken out at room temperature without waiting until the gloves become soft.

**Claims**

1. A polychloroprene latex composition comprising: a chloroprene (co)polymer (A); and an aromatic compound (B) having 7 to 10 carbon atoms, wherein
the polychloroprene latex composition has a proportion of the aromatic compound (B) having 7 to 10 carbon atoms of 0.0012 to 0.15 parts by mass based on 100 parts by mass of solid content of the polychloroprene latex composition.

2. The polychloroprene latex composition according to claim 1, wherein the aromatic compound (B) having 7 to 10 carbon atoms is a compound in which one or more hydrogen atoms bonded to an aromatic ring are replaced with a chlorine atom or a substituent containing a chlorine atom.

3. The polychloroprene latex composition according to claim 1 or 2, wherein the aromatic compound (B) having 7 to 10 carbon atoms is a disubstituted aromatic compound.

4. The polychloroprene latex composition according to any one of claims 1 to 3, wherein the aromatic compound (B) having 7 to 10 carbon atoms has a molecular weight of 100 to 200.

5. The polychloroprene latex composition according to any one of claims 1 to 4, comprising 4-chlorovinylbenzene as the aromatic compound (B) having 7 to 10 carbon atoms.

6. The polychloroprene latex composition according to any one of claims 1 to 5, comprising at least one selected from 2-methylbenzyl chloride and 3-methylbenzyl chloride as the aromatic compound (B) having 7 to 10 carbon atoms.

7. The polychloroprene latex composition according to any one of claims 1 to 6, wherein the polychloroprene latex composition has a proportion of the chloroprene (co)polymer (A) of 40 to 99.9 parts by mass based on 100 parts by mass of the solid content of the polychloroprene latex composition.

8. The polychloroprene latex composition according to any one of claims 1 to 7, further comprising a vulcanization accelerator, a metal oxide, and an antioxidant.

9. The polychloroprene latex composition according to any one of claims 1 to 8, further comprising a tackifier.

10. A dip-molded product obtained by molding the polychloroprene latex composition according to any one of claims 1 to 8 by a dipping method followed by curing.

11. A pressure-sensitive adhesive comprising the polychloroprene latex composition according to any one of claims 1 to 9.

12. An adhesive comprising the polychloroprene latex composition according to any one of claims 1 to 9.

13. An adhesive product comprising: a first adherend; a layer of solid content of the polychloroprene latex composition according to any one of claims 1 to 9 adhered to a part of the first adherend; and a second adherend laminated onto the layer of solid content.

## INTERNATIONAL SEARCH REPORT

International application No.

**PCT/JP2021/048751**

| A. | CLASSIFICATION OF SUBJECT MATTER |
|---|---|

*C09J 11/06*(2006.01)i; *C08K 5/03*(2006.01)i; *C08L 11/02*(2006.01)i; *C09J 111/02*(2006.01)i
FI: C08L11/02; C08K5/03; C09J111/02; C09J11/06

According to International Patent Classification (IPC) or to both national classification and IPC

| B. | FIELDS SEARCHED |
|---|---|

Minimum documentation searched (classification system followed by classification symbols)

C09J11/06; C08K5/03; C08L11/02; C09J111/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2009-173890 A (DENKI KAGAKU KOGYO KK) 06 August 2009 (2009-08-06) example 1, etc. | 1, 3, 7-9, 11-13 |
| A | | 2, 4-6, 10 |
| X | JP 2009-173891 A (DENKI KAGAKU KOGYO KK) 06 August 2009 (2009-08-06) table 1, example 2, etc. | 1, 3, 7-9, 11-13 |
| A | | 2, 4-6, 10 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 February 2022** | **08 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/048751**

| Patent document cited in search report | | | Publication date (day/month/year) | Patent family member(s) | Publication date (day/month/year) |
|---|---|---|---|---|---|
| JP | 2009-173890 | A | 06 August 2009 | (Family: none) | |
| JP | 2009-173891 | A | 06 August 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5525684 B

- JP 3203609 A